# Europäisches Patentamt

# European Patent Office

# Office européen des brevets

(11) Veröffentlichungsnummer: **0 519 266 B1**

(12) # EUROPÄISCHE PATENTSCHRIFT

(45) Veröffentlichungstag der Patentschrift: **26.10.94**

(51) Int. Cl.5: **B01J 19/24**, B01J 10/00

(21) Anmeldenummer: **92109328.2**

(22) Anmeldetag: **03.06.92**

(54) **Verfahren zur Herstellung von Vinylpolymeren.**

(30) Priorität: **19.06.91 DE 4120203**

(43) Veröffentlichungstag der Anmeldung:
**23.12.92 Patentblatt 92/52**

(45) Bekanntmachung des Hinweises auf die
Patenterteilung:
**26.10.94 Patentblatt 94/43**

(84) Benannte Vertragsstaaten:
**BE DE ES FR GB IT NL**

(56) Entgegenhaltungen:
**EP-A- 0 096 082**
**CH-A- 448 032**
**FR-A- 1 466 640**
**FR-A- 2 424 287**
**US-A- 2 727 884**

(73) Patentinhaber: **BASF Aktiengesellschaft**
**Carl-Bosch-Strasse 38**
**D-67063 Ludwigshafen (DE)**

(72) Erfinder: **Thiele, Reiner, Prof. Dr.**
**Lelitzer Strasse 86**
**O-4370 Koethen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, z.B. schlagzähes Polystyrol durch radikalisch ausgelöste Polymerisation von Styrol in Masse oder Lösung in der Weise herzustellen, daß das Kautschuk und Styrol-Monomer enthaltende Reaktionsgemisch den Reaktionsraum im wesentlichen in Form einer Pfropfenströmung, d.h. rückvermischungsfrei durchläuft. Der Reaktionsraum ist somit im Prinzip als Rohrreaktor oder eine Folge von Rohrreaktoren gestaltet.

Ein wesentliches Problem für den Verfahrensfachmann bildet dabei die beträchtliche Wärmetönung der Umsetzung, eine Erscheinung, die allen Verfahren der Polymerisation von Vinylmonomeren anhaftet.

Im Gegensatz zu Umsetzungen, an denen nur niedermolekulare Stoffe beteiligt sind, kommt man bei der rückvermischungsfreien, radikalischen Polymerisation nicht ohne künstliche Quervermischung (also senkrecht zur Strömungsrichtung) aus, weil die hohe Viskosität des Reaktionsgemisches, die sich nach und nach entwickelt, sonst keine ausreichende Wärmeabfuhr durch die Rohrwandungen ermöglicht.

Abgesehen von dem Sonderfall, den die EP-A-0 096 201 beschreibt, der in der Anordnung von Einbauten als sogenannte statische Mischelemente in einem Rohrreaktor besteht, sind Rohrreaktoren z.B. für die Styrolpolymerisation daher stets als relativ weite turmförmige, i.a. mit einer zentralen Rührwelle ausgestattete Zylinder gestaltet, wobei die an der Rührwelle angeordneten Rührelemente möglichst nur Quer- und nicht Längsvermischung bewirken sollen (vgl. z.B. US-Patent 4 442 273).

Reine Rohrreaktoren selbst aus sehr engen Röhren haben sich dagegen, obwohl sie gelegentlich beschrieben werden (US-Patentschrift 4 046 718) nicht durchsetzen können; die zuletzt genannte Patentschrift zeigt auch, daß in diesem Falle besondere Maßnahmen ergriffen werden müssen, um ein Anbacken von Reaktionsgut an den Reaktorwänden zu vermeiden, wie z.B. intermittierender, stoßweiser Transport des Reaktionsgemisches.

Eine andere Möglichkeit zur Masse-(Lösungs-)polymerisation von Styrol besteht in der Wahl eines rückvermischten Reaktors, also eines Rührkessels. Sie wird i.a. nur für einen Teilumsatz des Reaktionsguts genutzt, was sich aus der geringen Wärmeaustauschleistung von Rührkesseln leicht erklärt.

Die Kombination von rückvermischenden und nicht rückvermischenden Vorrichtungselementen führt z.B. zu sogenannten Umlauf-, Schlaufen- oder Schleifenreaktoren, also Rohrreaktoren, die in sich selbst zurücklaufen und an räumlich definierten Stellen Mittel zur Zufuhr und Abfuhr von Reaktionsteilnehmern bzw. Reaktionsgemisch aufweisen. Solche Vorrichtungen werden z.B. in der BE-Patentschrift 862 728 oder der EP-A 254 304 beschrieben sowie in der eingangs erwähnten EP-A 96 201. Umlaufreaktoren können je nach Betriebsbedingungen (Verhältnis von Umlaufzeit zur gesamten Verweilzeit) mehr als rückvermischt oder mehr als pfropfendurchströmt angesehen werden.

Die Bewältigung der Wärmeabfuhr aus einer hochviskosen Lösung ist allerdings nicht die einzige Aufgabe bei der Gestaltung von Reaktionsräumen für die Polymerisation; die Vielzahl der Vorschläge, die im Laufe der Zeit gemacht worden sind, weist vielmehr darauf hin, daß die Qualität des Reaktionsergebnisses also die Gleichmäßigkeit des gebildeten Polymeren hinsichtlich des Molekulargewichtsverteilung, Charakter und Größe der Kautschukpartikel, die durch Pfropfung auf den ursprünglich gelösten Primärkautschuk gebildet werden und vor allem die sogenannte Stippenfreiheit ein ständiges Zielproblem geblieben sind.

Unter Stippen werden kleine Gelpartikel verstanden, die durch örtliche Überhitzung des Reaktionsgutes in Blindräumen und an ungenügend bewegten Stellen des Reaktionsraums entstehen und im Extremfall zur Unbrauchbarkeit des Reaktionsergebnisses führen. Sie sind die eigentliche Ursache dafür, daß viele technisch einleuchtende Vorschläge zur Verfahrensgestaltung in die Praxis keinen Eingang gefunden haben.

Die Erfindung hat sich die Aufgabe gestellt, ein Verfahren der eingangs genannten Art anzugeben, das zu besonders hochwertigen Polymeren, insbesondere Polystyrol, schlagzähem Polystyrol und Polystyrolacrylnitril führt.

Erfindungsgegenstand ist ein Verfahren zur Masse- bzw. Lösungspolymerisation von Vinylmonomeren in einem im wesentlichen rückvermischten Reaktionsapparat, der als Umlaufreaktor ausgebildet ist, bei einer Temperatur zwischen 80 und 200°C, wobei ein mindestens 50 % der umlaufenden Masse aufnehmender Teil des Umlaufreaktors als Rohrbündelreaktor ausgebildet und die einzelnen Rohre des Reaktors derart dimensioniert sind, daß sich die folgenden Verfahrensbedingungen ergeben:

- die Temperaturdifferenz zwischen Einzelrohrachse und Kühlmittel, jeweils gemessen im gleichen Abschnitt des Reaktors beträgt nicht mehr als 16,5 K, wobei die Temperaturdifferenz zwischen Kühlmitteleintritt und Reaktionsgemischaustritt (bei Gleichstromführung) beträgt nicht mehr als etwa 20 K
- die Verweilzeit ist das 5- bis 20fache der Zirkulationszeit
- die schließliche Viskosität des Reaktionsgemisches ist kleiner als 750 Pas.

Die Reaktionstemperatur hängt in bekannter Weise davon ab, ob man die Polymerisation rein thermisch (dann benötigt man eine Temperatur oberhalb von 100 bis 150°C, wiederum abhängig von den vorgesehenen Monomeren) oder durch einen Radikalstarter auslösen will. Im letzteren Fall können bereits Temperaturen oberhalb von 80°C ausreichen.

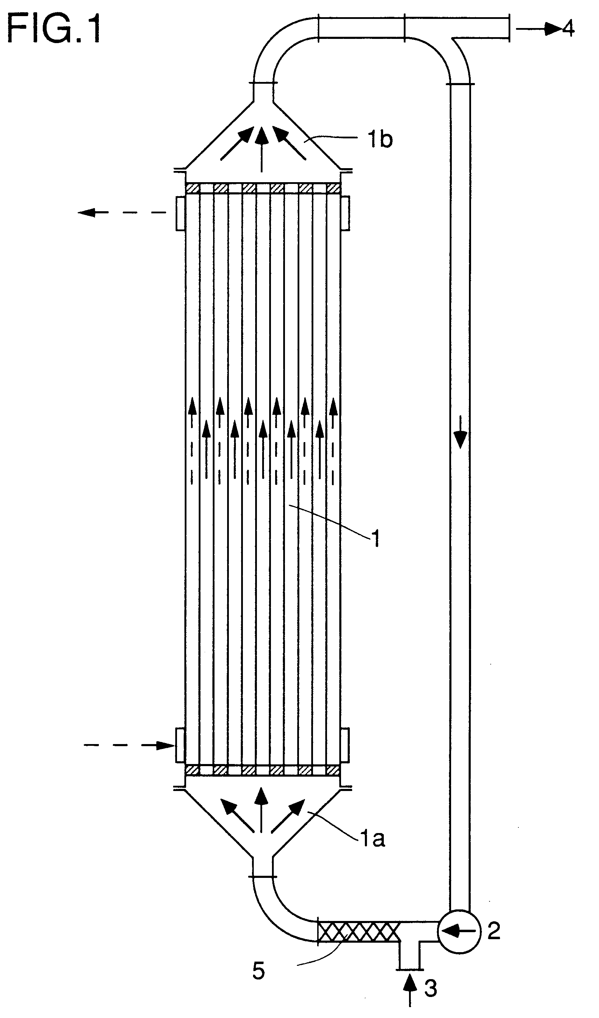

Die Erfindung wird in einer Anordnung oder Vorrichtung (Reaktor; Fig. 1) durchgeführt, die mindestens einen Rohrbündelwärmetauscher (1) aufweist, der eine Wärmeaustauschfläche von mindestens 100 qm je cbm umlaufende Masse bzw. Reaktorvolumen besitzt und dessen Volumen mindestens 50 % des Gesamtvolumens der Anordnung beträgt und außerdem Mittel zur Erzeugung eines Kreisstroms (2), Zu- und Ablauf (3, 4) sowie Einbauten zur Zwangsvermischung des Reaktorinhalts mit dem Zulauf (5).

Bevorzugt ist eine Anordnung, deren Rohrbündelwärmetauscher Einzelrohre mit einem Innendurchmesser von 10 bis 50 mm und einer Länge von wenigstens 400 mm aufweist, wobei die Höhe des Rohrbündels mindestens das zweifache seines Durchmessers beträgt. Der Rohrbündelreaktor (ohne Boden- und Deckelraum) nimmt i.a. mindestens 50, bei großtechnischer Auslegung mindestens 70 % des gesamten Reaktorinhalts auf.

Es ist vorteilhaft, wenn der Wärmetauscher durch einen Verteiler- und einen Sammelraum (Boden, Deckel; 1a bzw. 1b) begrenzt wird, deren Mantelfläche konisch ist und einen Öffnungswinkel von 60 bis 140° aufweist.

Um die Ablagerung von Polymermaterial an kritischen Stellen zu vermeiden, sollte der Wärmetauscher Endplatten (Böden) für das Rohrbündel aufweisen, deren Einzelrohrmündungen in den Verteiler- bzw. Sammelraum konisch geformt und/oder verrundet sind.

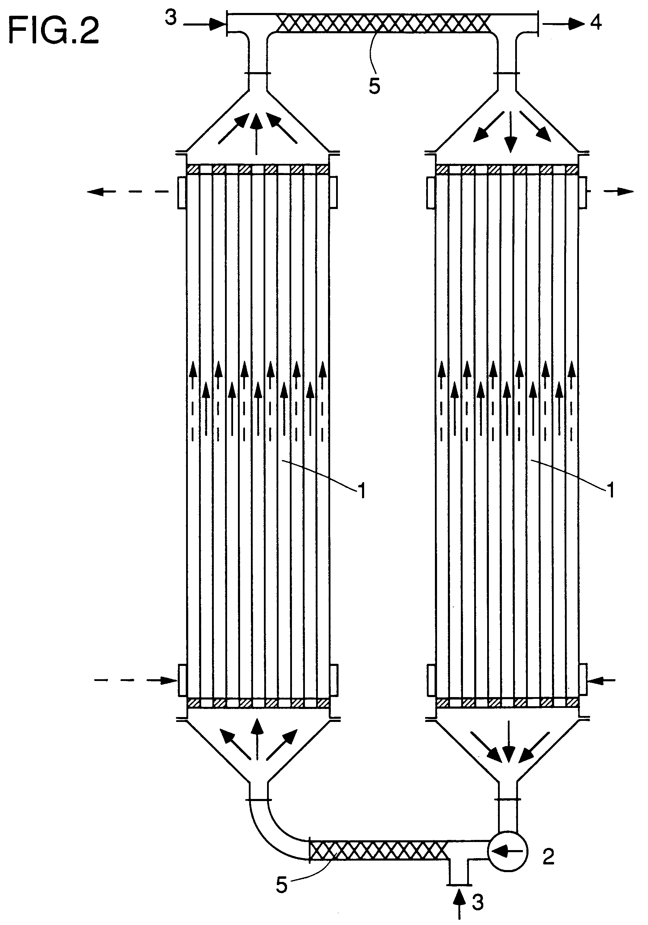

Der Rohrbündelwärmetauscher kann in unterschiedlicher Weise gestaltet sein; im einfachsten Falle hat er die in Fig. 1 und 2 wiedergegebene übliche Form eines zwischen zwei gelochten Böden sich erstreckenden Bündels paralleler Röhren, wobei sich jeweils ein Sammelraum an beiden Enden anschließt, der im vorliegenden Fall erfindungsfunktionell gestaltet sein sollte, wie vorstehend angegeben.

In diesem Fall strömt das Reaktionsgut durch die Röhren, während das Kühlmittel diese von außen umspült.

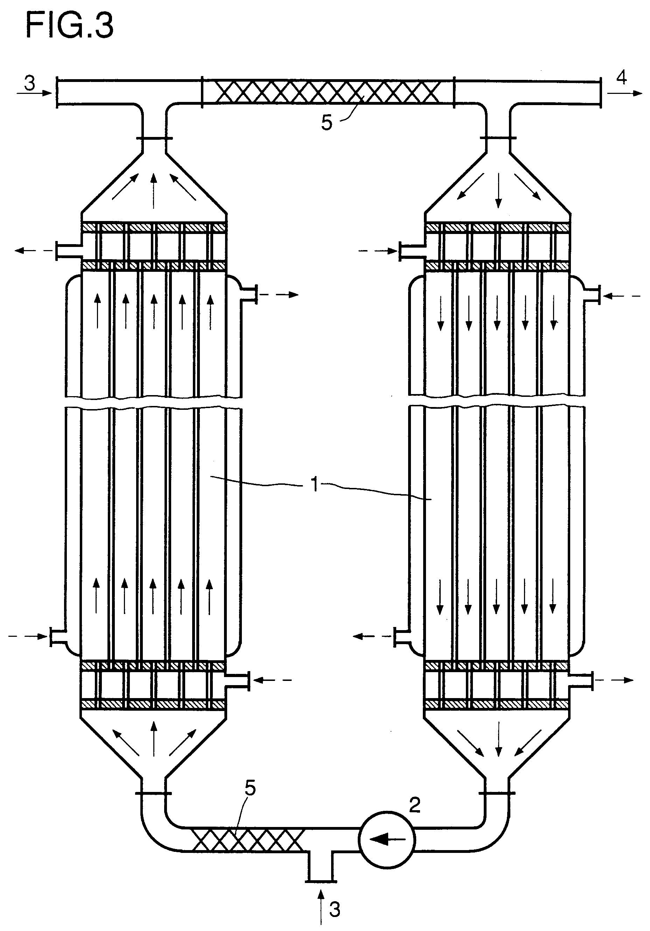

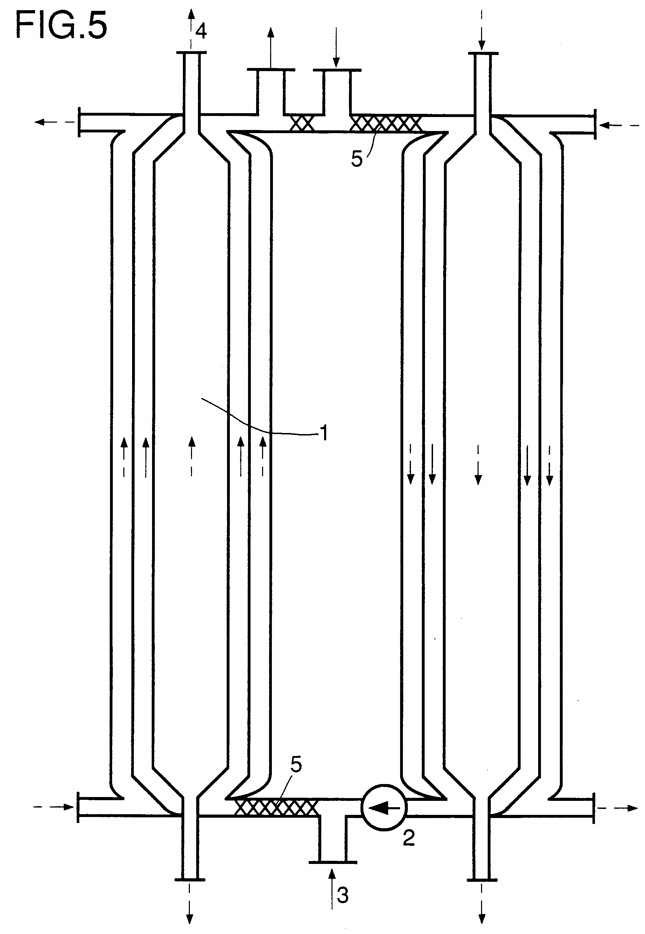

Die umgekehrte Anordnung, also vom Kühlmittel durchflossene Röhren, die von Reaktionsgut umgeben sind, ist bei entsprechender Gestaltung der kritischen Bereiche eines solchen Wärmetauschers ebenfalls möglich (Fig. 3). Um zu vermeiden, daß das Reaktionsgut, d.h. das Polymerisat anbackt und Verstopfungen verursacht, sollten die Zu- und Abfuhr des Reaktionsguts möglichst ungestört verlaufen; dies wird durch den in Fig. 3 und 5 wiedergegebenen Wärmetauscher ermöglicht.

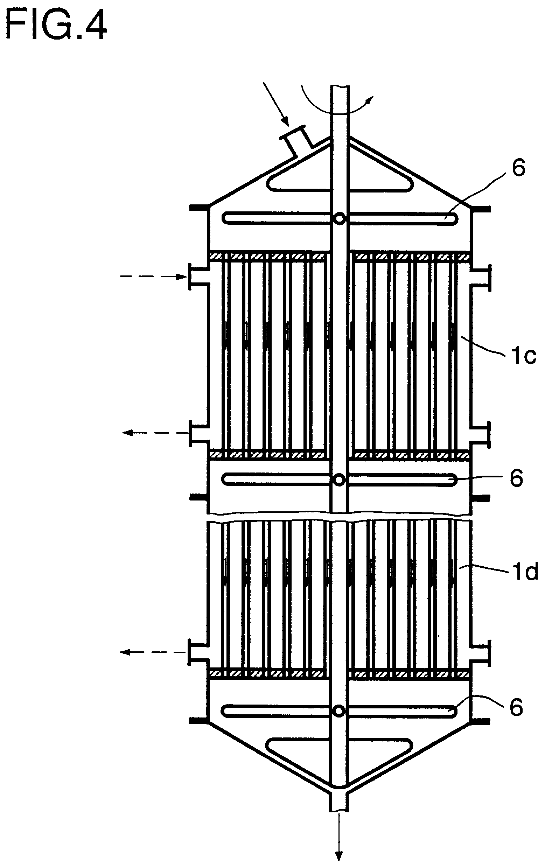

Eine Ausgestaltung des Wärmetauschers ist auch die in Fig. 4 wiedergegebene Anordnung, bei der Abschnitte eines Wärmetauschers, die als Rohrbündel (1c, 1d) ausgestaltet sind, mit Abschnitten abwechseln, in denen eine Quervermischung des Reaktionsgutes durch Rühren (6) stattfinden kann.

Die Erfindung ist anwendbar auf die Herstellung von Polymeren von insbesondere vinylaromatischen Verbindungen wie Polystyrol oder $\alpha$-Methylstyrol, deren Copolymeren wie Polystyrolacrylnitril und entsprechenden kautschukmodifizierten Polymeren wie schlagzähem Polystyrol oder ABS. Sie ist auch anwendbar für die Herstellung z.B. von Polymethyl(meth)acrylat, Polyvinylethern, -estern oder PVC und anderen Vinylpolymeren.

Zur praktischen Auslegung der Vorrichtung diene das nachstehende Beispiel für einen Versuchsreaktor.

Beispiel

Der in Fig. 1 wiedergegebene Reaktor ist ein Rohrbündelapparat (1), dessen Massendurchsatz durch eine Schmelzepumpe (2) aufrechterhalten wird.

Deckel- und Bodenregion (1a, 1b) sind konisch ausgeführt. Das zu polymerisierende Reaktionsgemisch strömt in den Rohren nach oben. Das Kühlmedium (Wärmeträger) fließt zwischen den Rohren im Gleichstrom. Der vorvermischte niederviskose Zulauf (3) wird hinter der Schmelzepumpe (2) dosiert und über eine statische Mischstrecke (5) eingemischt.

Kreisteilung des Rohrbündels $t \approx 1{,}3\ d_a$

Rohrinnendurchmesser $d_i$ = 25 mm

Rohraußendurchmesser $d_a$ = 30 mm

Reaktorinnendurchmesser $D_R$ = 0,8 m

Rohrzahl Z = 224

Querschnittsfläche des Reaktors $A_R$

$$A_R = \frac{D_R^2\,\pi}{4} = \frac{0,8^2\,\pi}{4} = 0,5\ m^2$$

perforierte Querschnittsfläche $A_{R,\phi}$

$$A_{R,\varphi} = \frac{d_i^2\,\pi}{4}\,Z = 0,11\ m^2$$

mittlere Perforation $\phi$

$$\varphi = \frac{A_{R,\varphi}}{A_R} = 0,21875$$

Reaktorhöhe $H_R$

$H_R = 3\ m$

Volumen im Rohrbündel $V_{Bü}$

$V_{Bü} = A_{r,\phi}\,H_R = 0{,}33\ m^3$

Volumen des konischen Deckelraumes $V_D$

$$A_D = \frac{A_R\,H_D}{3} = 0,067\ m^3\ mit\ H_D = 0,4\ D_R$$

Volumen der Kreislaufleitung $V_{Kr}$

$$V_{Kr} = \frac{d_{Kr}^2\,\pi}{4}\,L_{Kr} = \frac{0,1^2\,\pi}{4}\,8 = 0,063\ m^3$$

Effektives Volumen des Umlaufreaktors

$V_{R,eff} = V_{Bü} + 2V_D + V_{Kr} = 0{,}5265\ m^2$

Kühlfläche $A_K$

$$A_K = \frac{d_i + d_a}{2}\,\pi\,H_R Z = 58,2\ m^2$$

Spezifische Kühlfläche $A_{K,spez}$

$$A_{k,spez} = \frac{A_K}{V_{R,eff}} = 110,2\ \frac{m^2}{m^3}$$

Beispiel für einen geeigneten Betriebspunkt
Temperatur T = 160 °C
mittlere Verweilzeit $\bar{t}$ = 1,70 h
Lösungsmittelkonzentration $Y_{so}$ = 0,14 (Massenbruch Ethylbenzol)
Masseverhältnis Acrylnitril/Styrol im Zulauf

$$\frac{Y_{Bo}}{Y_{Ao}} = \frac{28,5}{71,5}$$

Unter diesen Bedingungen beträgt der Polymermassenbruch am Reaktoraustritt $Y_p$ = 0,65 und der massenmittlere Polymerisationsgrad $P_w$ = 1450.
Die Vorrichtung wird mit folgenden Parametern betrieben:
- Kreislaufstrom $\dot{V}_{Kr}$

$$\dot{V}_{Kr} = 6 \ \frac{m^3}{h}$$

- Kreislaufverhältnis $K_R$

$$K_R = \frac{\dot{V}_{Kr}}{\dot{V}_o} = 19,4$$

- Strömungsgeschwindigkeit im Rohrbündel

$$w_Z = \frac{H_R}{\bar{t}_Z} = \frac{\dot{V}_{B\ddot{u}}}{A_{R,\varphi}} = 57,42 \ \frac{m}{h} = 1,59 \ \frac{cm}{s}$$

- mittlere Verweilzeit im Bündel während einer Zirkulation

$\bar{t}_Z$ = 3,13 min

- Polymermassenbruchzuwachs bei einer Zirkulation

$$\Delta Y_P = \frac{Y_P}{K_R} = 0,0335$$

- Druckverlust im Rohrbündel $\Delta P_Z$

$$\Delta P_Z = \frac{128 \ \dot{V}_{B\ddot{u}} \ H_R \eta}{\pi \ Z \ d_i^4} = 306218 \ Pa = 0,306 \ MPa$$

- Druckverlust in der Kreislaufleitung $\Delta P_{Kr}$

$\Delta P_{Kr}$ = 0,679 MPa

- Dampfdruck

$P_D < 1,0$ MPa

- hydrostatischer Druck

$P_h < 0,05$ MPa

Wärmebilanz

$$\dot{Q}_R + \dot{Q}_P = \Delta\dot{Q}_K + \dot{Q}_D$$

$\dot{Q}_R$ Reaktionswärme
$\dot{Q}_P$ Mischwärme der Kreislaufpumpe
$\Delta\dot{Q}_K$ Konvektiver Enthalpiestrom (Differenz Austritt-Eintritt)
$\dot{Q}_D$ Wärmedurchgangsstrom
$\dot{m}_p$ Polymermassenstrom

$$\dot{Q}_R = \frac{(-\Delta H_R)\ m_p}{M_{Mon}} \qquad M_{Mon} = 84\ \frac{kg}{kmol} \quad \begin{array}{l} \text{mittlere Molmasse} \\ \text{des Monomeren} \end{array}$$

$$\dot{Q}_R = \frac{17500 \cdot 171,1}{84} = 35646\ \frac{kcal}{h}$$

$$\dot{Q}_p = 3565\ \frac{kcal}{h}$$

$$\Delta\dot{Q}_K = m_o c_{po}\ (T-T_o) = 263,3 \cdot 0,4\ (160-25) = 14218\ \frac{kcal}{h}$$

$$\dot{Q}_D = 24993\ \frac{kcal}{h}$$

$$\dot{Q}_D = m_p c_{pn}\ (T_{KA}-T_{KO}) = k_w A_K\ (T-T_K)$$

$$T_K = \frac{T_{KO}+T_{KA}}{2}$$

kleine Triebkraft
$k_w$ effektiver Wärmedurchgangskoeffizient

$$k_w = 35\ \frac{kcal}{m^2 hK}$$

sicherer Wert aus eigenen Messungen (zweidimensional ausgewertet)

$T-T_K = 12,3$ K
$T_{KA}-T_{KO} = 4$ K festgelegt
$\dot{m}_K = 12500\ \frac{kg}{h}$ Massenstrom des Kühlmittels
$T-T_{KO} = 14,3$ K eigenstabiles Reaktorverhalten

6

Die vorstehende Auslegung führt zu einem eigenstabilen Betriebspunkt. Bei Abweichungen vom stationären Sollwert wird eine einfache Stelltechnik benutzt (Stellgröße Massenstrom des Kühlmittels $m_K$). Bei einer Steigerung der Reaktorleistungen (gleichzeitige Absenkung des Lösungsmittelgehaltes, Erhöhung der Temperatur und Verkürzung der mittleren Verweilzeit) um mehr als 15 % wird die Anordnung instabil und muß dann geregelt werden. Teillastbetrieb des Reaktors ist in weiten Grenzen möglich.

Der in Fig. 2 dargestellte Reaktor arbeitet nach einem äquivalenten Prinzip mit 2 Rohrbündeln in der Schleife. Der verteilte Zulauf senkt Konzentrations- und Temperaturgradienten im Reaktor auf ein Mindestmaß. So benötigt man zur Erzeugung stark nichtazeotroper Copolymerer mit dem Reaktor nach Fig. 1 ein Kreislaufverhältnis von $K_R > 15$, mit dem Reaktor nach Fig. 2 aber nur $K_R > 8$. Der Reaktor nach Fig. 2 eignet sich besonders für eine (technische) Anlagengröße von $> 30 \frac{kt}{a}$ SAN-Copolymer.

## Patentansprüche

1. Verfahren zur Masse- bzw. Lösungspolymerisation von Vinylmonomeren in einem im wesentlichen rückvermischten Reaktionsapparat, der als Umlaufreaktor ausgebildet ist, bei einer Temperatur zwischen 80 und 200°C, dadurch gekennzeichnet, daß ein mindestens 50 % der umlaufenden Masse aufnehmender Teil des Umlaufreaktors als Rohrbündelreaktor ausgebildet und die einzelnen Rohre des Reaktors derart dimensioniert sind, daß sich die folgenden Verfahrensbedingungen ergeben:
    - die Temperaturdifferenz zwischen Einzelrohrachse und Kühlmittel, jeweils gemessen im gleichen Abschnitt des Reaktors beträgt nicht mehr als 16,5 K, oder die Temperaturdifferenz zwischen Kühlmitteleintritt und Reaktionsgemischaustritt (bei Gleichstromführung) beträgt nicht mehr als etwa 20 K,
    - die Verweilzeit ist das 5- bis 20fache der Zirkulationszeit,
    - die schließliche Viskosität des Reaktionsgemisches ist kleiner als 750 Pas.

2. Verfahren nach Anspruch 1, wobei der Rohrbündelwärmetauscher Einzelrohre mit einem Innendurchmesser von 10 bis 50 mm und einer Länge von wenigstens 400 mm aufweist, wobei die Höhe des Rohrbündels mindestens das zweifache seines Durchmessers beträgt.

3. Verfahren nach Anspruch 1, wobei der Wärmetauscher durch einen Verteiler-und einen Sammelraum (1a bzw. 1b) begrenzt wird, deren Mantelfläche konisch ist und einen Öffnungswinkel von 60 bis 140° aufweist.

4. Verfahren nach Anspruch 1, wobei der Wärmetauscher Endplatten für das Rohrbündel aufweist, deren Einzelrohrmündungen in den Verteiler- bzw. Sammelraum konisch geformt und/oder verrundet sind.

## Claims

1. A process for the mass or solution polymerization of vinyl monomers in an essentially back-mixed reaction apparatus which is in the form of a through-circulation reactor at from 80 to 200°C, wherein a part of the through-circulation reactor which holds at least 50% of the circulating material is in the form of a tube-bundle reactor and the individual tubes of the reactor are dimensioned such that the following process conditions result:
    the temperature difference between individual tube axis and coolant, measured in each case in the same section of the reactor, is not more than 16.5 K, or the temperature difference between coolant inlet and reaction mixture outlet (in the case of cocurrent operation) is not more than about 20 K,
    the residence time is from 5 to 20 times the circulation time and
    the final viscosity of the reaction mixture is less than 750 Pa.s.

2. A process as claimed in claim 1, wherein the tube-bundle heat exchanger has individual tubes having an internal diameter of from 10 to 50 mm and a length of at least 400 mm, the height of the tube bundle being at least twice its diameter.

3. A process as claimed in claim 1, wherein the heat exchanger is bounded by a distributor space and a collection space (1a and 1b, respectively), whose lateral surface is conical and has an apex angle of from 60 to 140°.

**4.** A process as claimed in claim 1, wherein the heat exchanger has end plates for the tube bundle, whose individual tube entrances into the distributor space or collection space are conically shaped and/or rounded.

**Revendications**

**1.** Procédé pour la polymérisation en masse, respectivement en solution, de monomères vinyliques dans un dispositif de réaction essentiellement à remélangeage qui est conçu en tant que réacteur à recirculation, à une température entre 80°C et 200°C, caractérisé en ce qu'une partie du réacteur à recirculation, contenant au moins 50% de la masse circulante, est conçue comme réacteur à faisceau tubulaire et que les tubes individuels du réacteur sont dimensionnés de manière à offrir les conditions de procédé suivantes :

- la différence de température entre l'axe des tubes individuels et l'agent réfrigérant, mesurée dans le même segment du réacteur, n'est pas supérieure à 16,5 K, ou la différence entre l'entrée de l'agent réfrigérant et la sortie du mélange réactionnel (à courant parallèle) n'est pas supérieure à 20 K,
- le temps de séjour représente 5 à 20 fois le temps de circulation,
- la viscosité finale du mélange réactionnel est inférieure à 750 Pas.

**2.** Procédé, selon la Revendication 1, où l'échangeur de chaleur à faisceau tubulaire présente des tubes individuels avec un diamètre intérieur de 10 à 50 mm et une longueur d'au moins 400 mm, où la hauteur du faisceau tubulaire mesure au moins le double de son diamètre.

**3.** Procédé, selon la Revendication 1, où l'échangeur de chaleur est limité par une chambre de distribution et une chambre collectrice (1a, respectivement 1b), dont la surface latérale est conique et présente un angle d'ouverture de 60° à 140°.

**4.** Procédé, selon la Revendication 1, où l'échangeur de chaleur présente des plaques d'extrémité pour le faisceau tubulaire, dont les orifices des tubes individuels, dans la chambre de distribution ou dans la chambre collectrice, présentent une forme conique et/ou arrondie.

# FIG.1

# FIG.2

# FIG.3

# FIG.4

# FIG.5